# EUROPÄISCHE PATENTANMELDUNG

(11) **EP 4 332 298 A1**
(43) Veröffentlichungstag der Anmeldung: **06.03.2024**
(21) Anmeldenummer: 23176951.4
(22) Anmeldetag: 02.06.2023
(51) Int. Cl.: D21J 3/10, D21J 7/00

(54) **VERFAHREN ZUM HERSTELLEN EINES BEHÄLTERS UND EINE VORRICHTUNG ZUM AUSFÜHREN DES VERFAHRENS**

(30) Priorität: 25.08.2022 DE 102022121491
(71) Anmelder: Krones AG, 93073 Neutraubling (DE)
(72) Erfinder: ZACHARIAS, Joerg, Neutraubling (DE); WAHL, Matthias, Neutraubling (DE)
(74) Vertreter: Grünecker Patent- und Rechtsanwälte PartG mbB

(57) **Zusammenfassung**

Die Erfindung betrifft ein Verfahren zum Herstellen eines Behälters (11, 16, 22) umfassend Boden (2), Seitenwand (3), Hals (4) und mindestens eine profilierte Struktur (8, 13, 20, 21) am Hals (4), wobei ein Material des Behälters (11, 16, 22) Fasern, beispielsweise Pulpe, umfasst, wobei das Verfahren umfasst: Herstellen eines Rohlings (1) des Behälters (11, 16, 22) aus dem Material, wobei der Rohling (1) den Boden (2), die Seitenwand (3) und den Hals (4) umfasst, und anschließend Anordnen der mindestens einen profilierten Struktur (8, 13, 20, 21) am Hals (4) des Rohlings (1). Weiter betrifft die Erfindung eine Vorrichtung zum Ausführen des Verfahrens mit einer Ausformungsvorrichtung zum Herstellen des Rohlings (1) des Behälters (11, 16, 22) aus dem Material, wobei der Rohling (1) den Boden (2), die Seitenwand (3) und den Hals (4) umfasst, und einer Anordenvorrichtung zum Anordnen der mindestens einen profilierten Struktur (8, 13, 20, 21) am Hals (4) des Rohlings (1).

## Beschreibung

Die Erfindung betrifft ein Verfahren zum Herstellen eines Behälters und eine Vorrichtung zum Ausführen des Verfahrens gemäß den unabhängigen Ansprüchen.

### Stand der Technik

WO2019/034704 A1 offenbart ein Verfahren und eine Vorrichtung zum Ausformen von Behältern aus nachhaltigem Material, beispielsweise Pulpe. Zunächst wird überwiegend flüssiges Material in eine Form eingebracht und ein Behälterrohling durch Anlagern des Materials an der Forminnenwand gebildet. Durch Druckbeaufschlagung mit einer Gummiblase im Innenraum wird ein Teil der Flüssigkeit durch die durchlässige Formwandung verdrängt. Das dabei entstehende Kopfstück mit der Behältermündung weist zunächst eine Überlänge auf. Zur Ausprägung des Kopfstücks wird eine axial verschiebbare Hülse verwendet, die beim Einfahren in die Form den Behälterrohling zumindest etwas verkürzt, das Material am Kopfstück staucht und auch radial verdrängt. Eine Trocknung des Behälters erfolgt anschließend.

Die Herstellungstechnik ist vergleichsweise aufwendig. Ein Ausformen einer genau auszuprägenden und belastbaren Kontur, wie beispielsweise ein Schraubgewindegang zum Aufbringen eines Schraubverschlusses, ist nicht gewährleistet. Durch die Art der Materialeinbringung kann nur mit einem Material gearbeitet werden. Am ausgeformten Kopfstück befindet sich im Allgemeinen, da es eine größere Wandstärke aufweist, mehr feuchtes Material als an den übrigen Behälterabschnitten, sodass eine Trocknung problematisch sein kann.

### Aufgabe

Die Aufgabe der Erfindung ist es, ein Verfahren und eine Vorrichtung zur Verfügung zu stellen, die ein Herstellen eines Fasern, beispielsweise Pulpe, umfassenden Behälters ermöglichen, der eine ausreichende Festigkeit und Stabilität aufweist.

### Lösung

Die Aufgabe wird gelöst durch das Verfahren und die Vorrichtung gemäß den unabhängigen Ansprüchen. Weitere Ausführungsformen sind in den Unteransprüchen offenbart.

Das erfindungsgemäße Verfahren zum Herstellen eines Behälters umfassend Boden, Seitenwand, Hals und mindestens eine profilierte Struktur am Hals, wobei ein Material des Behälters Fasern, beispielsweise Pulpe, umfasst, wobei das Verfahren umfasst:
- Herstellen eines Rohlings des Behälters aus dem Material, wobei der Rohling den Boden, die Seitenwand und den Hals umfasst,
- anschließend Anordnen der mindestens einen profilierten Struktur am Hals des Rohlings.

Der Rohling des Behälters umfasst nicht die profilierte Struktur am Hals. Auch sind am Hals des Rohlings kein Gewinde und/oder kein Tragring und/oder dergleichen vorgesehen. Der Hals des Rohlings kann insgesamt eine glatte Oberfläche umfassen.

Das Verfahren ermöglicht, zunächst einen einfach geformten Rohling des Behälters herzustellen und das Anordnen der mindestens einen profilierten Struktur am Hals von dem Herstellungsprozess des Rohlings zu entkoppeln.

Die mindestens eine profilierte Struktur kann unabhängig vom Rohling hergestellt werden, wobei beispielsweise ein Augenmerk auf eine genau auszuprägende und belastbare Kontur der mindestens einen profilierten Struktur gerichtet werden kann.

Die mindestens eine profilierte Struktur kann ein Gewinde und/oder einen Tragring umfassen. An das Gewinde und/oder den Tragring können hohe Anforderungen an Belastbarkeit und/oder Genauigkeit bestehen.

Als Material des Behälters kann ein erstes Material für den Rohling des Behälters und ein zweites Material für die mindestens eine profilierte Struktur verwendet werden. Das erste und das zweite Material können verschieden sein. Das zweite Material kann Anforderungen an eine höhere Belastbarkeit der durch sie hergestellten mindestens einen profilierten Struktur erfüllen.

Das zweite Material kann härtende Bestandteile umfassen, beispielsweise Holzleim, Harz oder Epoxidharz. Dadurch kann die Stabilität der mindestens einen profilierten Struktur erhöht werden.

Die mindestens eine profilierte Struktur kann im Innern mindestens einen Faden umfassen. Beispielsweise kann der Faden im Innern des Gewindestrangs angeordnet sein. Durch die Härte des Fadens kann die Stabilität des Gewindestrangs erhöht werden.

Das anschließende Anordnen kann ein Aufschieben einer Hülse, die die mindestens eine profilierte Struktur umfasst, auf den Hals und ein Verkleben oder Verpressen der Hülse mit dem Hals zur Erhaltung einer dauerhaften Verbindung der Hülse und des Halses.

Alternativ kann das anschließende Anordnen ein Aufschieben einer angefeuchteten Hülse, die die mindestens eine profilierte Struktur umfasst, auf den Hals umfassen und ein Trocknen der Hülse zur Erhaltung einer dauerhaften Verbindung der Hülse und des Halses. Beispielsweise kann das Trocken mittels einer Trocknungsvorrichtung oder bei Raumtemperatur erfolgen. Die Trocknungsvorrichtung kann einen Trockner, Strahler oder eine Heizung umfassen. Das Trocknen bei Raumtemperatur kann durch Abwarten für eine vorgegebene Zeitdauer erfolgen. Beispielsweise kann in dem Verfahren eine zunächst trockene Hülse zur Verfügung gestellt werden, die dann in dem Verfahren zunächst angefeuchtet werden kann, bevor sie auf den Hals aufgeschoben werden kann.

Beispielsweise kann ein Rohrmaterial zur Verfügung gestellt werden, das die mindestens eine profilierte Struktur umfasst. Von diesem Rohrmaterial können die Hülsen entsprechend abgeschnitten und für das anschließende Anordnen verwendet werden.

Alternativ kann das anschließende Anordnen ein Aufwickeln eines bandhaften Zuschnitts, der die mindestens eine profilierte Struktur umfasst, auf den Hals und ein Verkleben oder Verpressen des bandhaften Zuschnitts mit dem Hals zur Erhaltung einer dauerhaften Verbindung des bandhaften Zuschnitts und des Halses umfassen.

Beispielsweise kann eine Rolle zur Verfügung gestellt werden, auf der eine bandhafte Anordnung der mindestens einen profilierten Struktur aufgerollt gelagert ist. Von dieser Rolle können die bandhaften Zuschnitte entsprechend abgeschnitten und für das anschließende Anordnen verwendet werden.

Alternativ kann das anschließende Anordnen ein Aufspritzen der mindestens einen profilierten Struktur auf den Hals mittels mindestens einer Spritzdüse umfassen.

Das Verfahren kann weiter ein Trocknen der mindestens einen profilierten Struktur umfassen.

Das Aufspritzen kann ein Drehen des Rohlings um seine Längsachse und dabei Höhenverstellen des Rohlings zum Aufspritzen eines um den Hals umlaufenden Gewindes und/oder ein Drehen des Rohlings um seine Längsachse und dabei Aufspritzen eines Tragrings auf dem Hals umfassen.

Das Aufspritzen kann ein Vorbeiführen der mindestens einen Spritzdüse entlang eines spiralförmigen Pfads am Hals des Rohlings zum Aufspritzen eines um den Hals umlaufenden Gewindes umfassen.

Nach dem anschließenden Anordnen kann ein Beschichten der mindestens einen profilierten Struktur erfolgen. Durch die Beschichtung kann eine bessere Gleiteigenschaft erreicht werden, die beim Anziehen und/oder Aufschrauben eines Verschlusses auf die profilierte Struktur die Reibung oder eine Beschädigungsgefahr verringern kann.

Die Vorrichtung zum Ausführen des Verfahrens, wie oben oder weiter unten beschrieben umfasst eine Ausformungsvorrichtung zum Herstellen des Rohlings des Behälters aus dem Material, wobei der Rohling den Boden, die Seitenwand und den Hals umfasst, und eine Anordenvorrichtung zum Anordnen der mindestens einen profilierten Struktur am Hals des Rohlings.

Die Ausformungsvorrichtung kann eine Form umfassen, in der das Material eingebracht und mittels einer Gummiblase ausgeformt wird oder die Ausformungsvorrichtung kann eine Spritzgussvorrichtung umfassen.

Die Vorrichtung kann weiter eine Aufschiebevorrichtung zum Aufschieben der Hülse, die die mindestens eine profilierte Struktur umfasst, auf den Hals oder eine Aufwickelvorrichtung zum Aufwickeln des bandhaften Zuschnitts, der die mindestens eine profilierte Struktur umfasst, auf den Hals oder eine Aufspritzvorrichtung umfassend die mindestens eine Spritzdüse zum Aufspritzen der mindestens einen profilierten Struktur auf den Hals umfassen.

Die Vorrichtung kann weiter eine Beschichtungsvorrichtung zum Beschichten der mindestens einen profilierten Struktur umfassen. Durch die Beschichtung kann eine bessere Gleiteigenschaft erreicht werden, die beim Anziehen und/oder Aufschrauben eines Verschlusses auf die profilierte Struktur die Reibung oder eine Beschädigungsgefahr verringern kann.

### Kurze Figurenbeschreibung

Die beigefügten Figuren stellen beispielhaft zum besseren Verständnis und zur Veranschaulichung Aspekte und/oder Ausführungsbeispiele der Erfindung dar. Es zeigt:
Figur 1A einen Rohling des Behälters,
Figur 1B ein Rohrmaterial, das die mindestens eine profilierten Struktur umfasst,
Figur 1C eine von dem Rohrmaterial abgeschnittene Hülse,
Figur 1D einen Behälter umfassend den Rohling mit aufgebrachter Hülse,
Figur 2A einen Rohling des Behälters,
Figur 2B eine Rolle, die eine bandhafte Anordnung der mindestens einen profilierten Struktur umfasst,
Figur 2C ein von der Rolle abgeschnittenen bandhaften Zuschnitt,
Figur 2D einen Behälter umfassend den Rohling mit aufgebrachtem bandhaften Zuschnitt,
Figur 3A einen Rohling des Behälters und
Figur 3B einen Behälter umfassend den Rohling mit aufgespritzter profilierten Struktur.

### Ausführliche Figurenbeschreibung

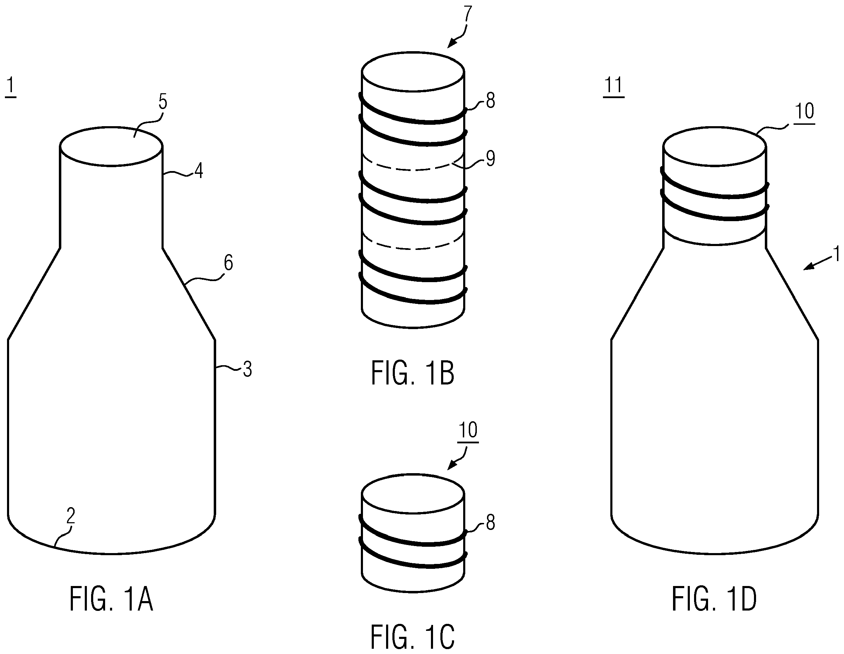

Die Figur 1A zeigt einen Rohling 1 des Behälters, wobei der Rohling einen Boden 2, eine Seitenwand 3, einen Schulterbereich 6, einen Hals 4 und eine Mündungsöffnung umfasst. Zur Herstellung des Behälters wird noch eine profilierte Struktur in Form einer Hülse auf den Hals 4 des Rohlings 1 aufgebracht.

Die Figur 1B zeigt ein Rohrmaterial 7, das die mindestens eine profilierten Struktur 8, hier als Gewinde 8 ausgebildet, umfasst. Das Rohrmaterial 7 ist derart ausgebildet, dass einzelne Hülsen davon abgeschnitten und/oder abgetrennt werden können, die dann auf den Hals 4 des Rohlings 1 aufgebracht werden können. Ein Abschneiden und/oder Abtrennen der einzelnen Hülsen kann jeweils entlang einer Trennnaht 9 erfolgen.

Die Figur 1C zeigt eine von dem Rohrmaterial 7 abgeschnittene bzw. abgetrennte Hülse 10.

Die Figur 1D zeigt einen Behälter 11 umfassend den Rohling 1 mit aufgebrachter Hülse 10. Dieser Behälter 11 kann nun mittels eines entsprechenden Deckels verschlossen werden, wobei der Verschluss wiederverschließbar ausgebildet sein kann.

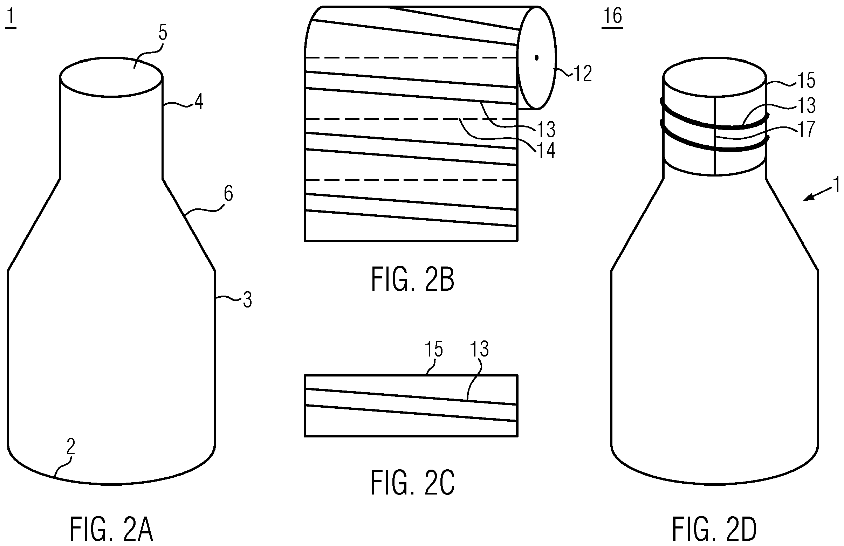

Die Figur 2A zeigt einen Rohling 1 des Behälters. Zur Herstellung des Behälters wird noch eine profilierte Struktur in Form eines bandhaften Zuschnitts auf den Hals 4 des Rohlings 1 aufgebracht.

Die Figur 2B zeigt eine Rolle 12, die eine bandhafte Anordnung der mindestens einen profilierten Struktur 13, die hier als Gewinde ausgebildet ist, umfasst. Die Rolle 12 ist derart ausgebildet, dass einzelne bandhafte Zuschnitte davon abgeschnitten und/oder abgetrennt werden können, die dann auf den Hals 4 des Rohlings 1 aufgebracht werden können. Ein Abschneiden und/oder Abtrennen der einzelnen bandhaften Zuschnitte kann jeweils entlang einer Trennnaht 14 erfolgen.

Die Figur 2C zeigt einen von der Rolle 12 abgeschnittenen bandhaften Zuschnitt 15.

Die Figur 2D zeigt einen Behälter 16 umfassend den Rohling 1 mit dem aufgebrachtem bandhaften Zuschnitt 15. Dieser Behälter 16 kann nun mittels eines entsprechenden Deckels verschlossen werden, wobei der Verschluss wiederverschließbar ausgebildet sein kann.

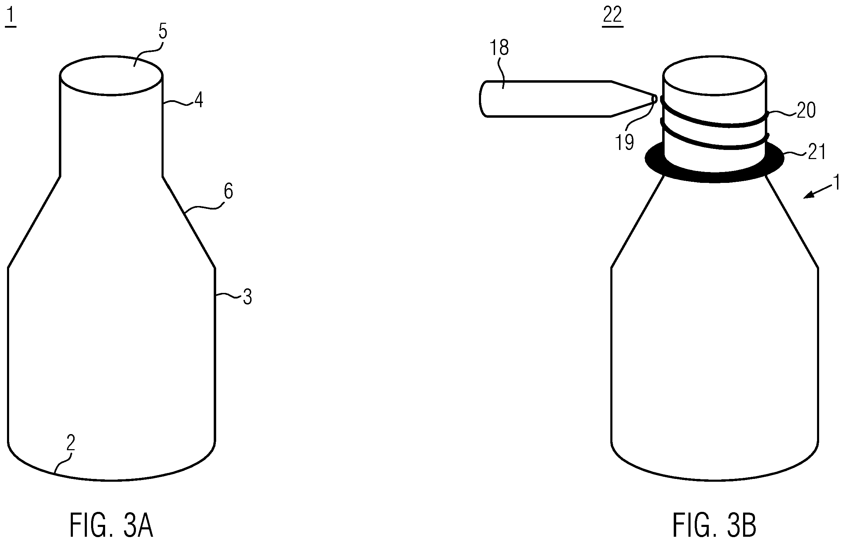

Die Figur 3A zeigt einen Rohling 1 des Behälters. Zur Herstellung des Behälters wird noch eine profilierte Struktur in Form eines Gewindes und eines Tragrings auf den Hals 4 des Rohlings 1 aufgespritzt.

Die Figur 3B zeigt einen Behälter 22 umfassend den Rohling 1 mit aufgespritzter profilierten Struktur, die hier als Gewinde 20 und Tragring 21 ausgebildet ist. Das Aufspritzen kann mit einer Aufspritzvorrichtung 18, die eine Spritzdüse 19 umfasst, erfolgen.

## Patentansprüche

1. Verfahren zum Herstellen eines Behälters (11, 16, 22) umfassend Boden (2), Seitenwand (3), Hals (4) und mindestens eine profilierte Struktur (8, 13, 20, 21) am Hals (4), wobei ein Material des Behälters (11, 16, 22) Fasern, beispielsweise Pulpe, umfasst, wobei das Verfahren umfasst:
- Herstellen eines Rohlings (1) des Behälters (11, 16, 22) aus dem Material, wobei der Rohling (1) den Boden (2), die Seitenwand (3) und den Hals (4) umfasst,
- anschließend Anordnen der mindestens einen profilierten Struktur (8, 13, 20, 21) am Hals (4) des Rohlings (1).

2. Das Verfahren nach Anspruch 1, wobei die mindestens eine profilierte Struktur (8, 13, 20, 21) ein Gewinde (8, 13, 20) und/oder einen Tragring (21) umfasst.

3. Das Verfahren nach Anspruch 1 oder 2, wobei als Material des Behälters (11, 16, 22) ein erstes Material für den Rohling (1) des Behälters (11, 16, 22) und ein zweites Material für die mindestens eine profilierte Struktur (8, 13, 20, 21) verwendet wird, wobei beispielsweise das erste und das zweite Material verschieden sind.

4. Das Verfahren nach Anspruch 3, wobei das zweite Material härtende Bestandteile umfasst, beispielsweise Holzleim, Harz oder Epoxidharz.

5. Das Verfahren nach einem der Ansprüche 1 bis 4, wobei die mindestens eine profilierte Struktur (8, 13, 20, 21) im Innern mindestens einen Faden umfasst.

6. Das Verfahren nach einem der Ansprüche 1 bis 5, wobei das anschließende Anordnen umfasst:
- Aufschieben einer Hülse (10), die die mindestens eine profilierte Struktur (8) umfasst, auf den Hals (4) und
- Verkleben oder Verpressen der Hülse (10) mit dem Hals (4) zur Erhaltung einer dauerhaften Verbindung der Hülse (10) und des Halses (4), oder
- Aufschieben einer angefeuchteten Hülse (10), die die mindestens eine profilierte Struktur (8) umfasst, auf den Hals (4) und
- Trocknen der Hülse (10) zur Erhaltung einer dauerhaften Verbindung der Hülse (10) und des Halses (4), wobei beispielsweise das Trocken mittels einer Trocknungsvorrichtung oder bei Raumtemperatur erfolgt.

7. Das Verfahren nach einem der Ansprüche 1 bis 5, wobei das anschließende Anordnen umfasst:
- Aufwickeln eines bandhaften Zuschnitts (15), der die mindestens eine profilierte Struktur (13) umfasst, auf den Hals (4) und
- Verkleben oder Verpressen des bandhaften Zuschnitts (15) mit dem Hals (4) zur Erhaltung einer dauerhaften Verbindung des bandhaften Zuschnitts (15) und des Halses (4).

8. Das Verfahren nach einem der Ansprüche 1 bis 5, wobei das anschließende Anordnen umfasst:
- Aufspritzen der mindestens einen profilierten Struktur (20, 21) auf den Hals (4) mittels mindestens einer Spritzdüse (19).

9. Das Verfahren nach Anspruch 8, weiter umfassend ein Trocknen der mindestens einen profilierten Struktur (8, 13, 20, 21).

10. Das Verfahren nach Anspruch 8 oder 9, wobei das Aufspritzen umfasst:
- Drehen des Rohlings (1) um seine Längsachse und dabei Höhenverstellen des Rohlings (1) zum Aufspritzen eines um den Hals (4) umlaufenden Gewindes (20) und/oder
- Drehen des Rohlings (1) um seine Längsachse und dabei Aufspritzen eines Tragrings (21) auf dem Hals (4).

11. Das Verfahren nach Anspruch 8, wobei das Aufspritzen umfasst:
- Vorbeiführen der mindestens einen Spritzdüse (19) entlang eines spiralförmigen Pfads am Hals (4) zum Aufspritzen eines um den Hals (4) umlaufenden Gewindes (20).

12. Das Verfahren nach einem der Ansprüche 1 bis 11, wobei nach dem anschließenden Anordnen ein Beschichten der mindestens einen profilierten Struktur (8, 13, 20, 21) erfolgt.

13. Vorrichtung zum Ausführen des Verfahrens nach einem der Ansprüche 1 bis 12, wobei die Vorrichtung umfasst:
- eine Ausformungsvorrichtung zum Herstellen des Rohlings (1) des Behälters (11, 16, 22) aus dem Material, wobei der Rohling (1) den Boden (2), die Seitenwand (3) und den Hals (4) umfasst,
- eine Anordenvorrichtung zum Anordnen der mindestens einen profilierten Struktur (8, 13, 20, 21) am Hals (4) des Rohlings (1).

14. Die Vorrichtung nach Anspruch 13, weiter umfassend:
- eine Aufschiebevorrichtung zum Aufschieben der Hülse (10), die die mindestens eine profilierte Struktur umfasst (8), auf den Hals (4) oder
- eine Aufwickelvorrichtung zum Aufwickeln des bandhaften Zuschnitts (15), der die mindestens eine profilierte Struktur (13) umfasst, auf den Hals (4) oder
- eine Aufspritzvorrichtung (18) umfassend die mindestens eine Spritzdüse (19) zum Aufspritzen der mindestens einen profilierten Struktur (20, 21) auf den Hals (4).

15. Die Vorrichtung nach Anspruch 13 oder 14, weiter umfassend eine Beschichtungsvorrichtung zum Beschichten der mindestens einen profilierten Struktur (8, 13, 20, 21).
